# DEMANDE DE BREVET EUROPEEN

(11) **EP 1 972 901 A1**
(43) Date de publication de la demande: **24.09.2008**
(21) Numéro de dépôt: 07104445.7
(22) Date de dépôt: 20.03.2007
(51) Int. Cl.: G01D 5/347, G01D 5/245

(54) **Procédé de mesure bidimensionnelle de la position d'un objet**

(71) Demandeur: CSEM Centre Suisse d'Electronique et de Microtechnique SA Recherche et Développement, 2007 Neuchâtel (CH)
(72) Inventeur: FRANZI, Edoardo, 1400, Yverdon-les-Bains (CH); MASA, Peter, 2208, Les Hauts-Geneveys (CH); HEIM, Pascal, 2024, Saint-Aubin (CH)
(74) Mandataire: GLN

(57) **Abrégé**

L'invention concerne un procédé de détermination de la position d'un objet par rapport à une position de référence. Il comporte les principales opérations suivantes :
- association à cet objet d'un motif périodique bidimensionnel (11) formé de marques (17, 18) disposées régulièrement selon une grille orthogonale, d'axes X et Y, à lignes et colonnes,
- irradiation dudit motif au moyen d'ondes électromagnétiques,
- captation des ondes réémises par le motif pour obtenir une image de leur répartition spatiale,
- élaboration de deux signaux de marquage périodiques (Mx, My) respectivement représentatifs de cette image selon lesdits axes, et
- comparaison de ces signaux à des références représentatives de ladite position de référence afin de déterminer le décalage de position de l'objet selon les axes X et Y par rapport à cette position de référence.

## Description

La présente invention concerne un procédé de mesure bidimensionnelle de la position d'un objet comportant un marquage spatialement périodique dans deux directions orthogonales.

Le brevet US 6,528,783 décrit un capteur capable de déterminer la position relative d'un objet doté d'un marquage unidimensionnel périodique. Lorsque ce marquage est exposé à des ondes électromagnétiques, il les rétrodiffuse sur un réseau de détecteurs dont les circuits associés délivrent un signal de marquage représentatif du déplacement. Selon un procédé classique de mesure de déphasage en quadrature, ce signal est multiplié scalairement par deux signaux de référence sinusoïdaux en quadrature (sinus et cosinus) pour fournir les composantes X et Y d'un vecteur dont la phase est la mesure du déphasage du signal de marquage par rapport à ces signaux de référence.

Ce brevet US propose une mise en oeuvre analogique du procédé. Bien que la méthode donne des résultats très précis lorsqu'elle est appliquée sur un grand nombre de périodes du signal à mesurer, elle nécessite cependant une très bonne correspondance entre la fréquence centrale spatiale du marquage et la fréquence commune des signaux de référence. Le dispositif de mesure est donc soumis, dans sa construction, à de sévères tolérances de montage mécaniques et optiques.

Le document EP 1 750 099 A1 propose, sur le même principe, un dispositif de mesure qui ne nécessite pas de telles contraintes de précision. A cet effet, il comporte des moyens de mesure d'une fréquence spatiale du marquage et des moyens de réglage de la fréquence des signaux de référence en fonction de la fréquence spatiale mesurée. Les éventuelles imprécisions de la construction sont ainsi compensées grâce au fait que les signaux de référence sont automatiquement mis à la bonne fréquence.

Les documents précités décrivent des moyens de mesure de phase de la position relative (c'est-à-dire à l'intérieur d'une période du signal de référence) de marquages périodiques par rapport à une référence. Un système de mesure de position absolue sur une distance supérieure à une période nécessiterait, en outre, un deuxième marquage qui, associé au marquage périodique, permettrait d'identifier la position de manière unique. Ce deuxième marquage pourrait correspondre à un code numérique réalisé à l'aide d'une représentation connue; par exemple, le code Manchester qui consiste à coder les "1" par des séquences noir/blanc et les "0" par des séquences blanc/noir.

La présente invention est née d'une réflexion sur la possibilité d'appliquer la technique susmentionnée à la réalisation d'un capteur de position absolue bidimensionnel en vue d'applications, par exemple, aux machines-outils (CNC), à la robotique et aux positionnements fins en général. Le problème posé est donc de rendre bidimensionnelle la combinaison des marquages périodique et numérique pour l'identification de la position absolue en X et en Y.

Un but de la présente invention est d'apporter une solution à ce problème.

De façon plus précise, l'invention concerne un procédé de détermination de la position absolue d'un objet par rapport à une position de référence, caractérisé en ce qu'il comporte les principales opérations suivantes :
- association à cet objet d'un motif périodique bidimensionnel formé de marques disposées régulièrement selon une grille bidimensionnelle à X lignes et Y colonnes,
- irradiation dudit motif au moyen d'ondes électromagnétiques,
- captation des ondes réémises par le motif pour obtenir une image de leur répartition spatiale,
- élaboration de deux signaux de marquage périodiques respectivement représentatifs de cette image selon lesdites lignes et colonnes, et
- comparaison de ces signaux à des références représentatives de ladite position de référence afin de déterminer le décalage de position de l'objet selon les axes X et Y par rapport à cette position de référence.

Selon un premier mode de mise en oeuvre de l'invention, lesdites marques comportent un premier réseau de carrés identiques et un deuxième réseau de carrés identiques disposés au centre de cases dont les angles sont occupés par les carrés du premier réseau, les carrés de ce deuxième réseau n'étant pas présents dans toutes les cases afin de fournir un code pour chaque ligne et chaque colonne de la grille.

Selon un deuxième mode de mise en oeuvre de l'invention, lesdites marques comportent un premier réseau de carrés identiques et un réseau de traits obliques joignant les carrés du premier réseau de la ligne adjacente, ces traits étant orientés de gauche à droite ou de droite à gauche afin de fournir un code pour chaque ligne et chaque colonne de la grille.

L'invention sera mieux comprise à la lecture de la description qui suit, faite en regard des dessins annexés dans lesquels :
- la figure 1 représente schématiquement la structure générale d'un dispositif mettant en oeuvre le procédé selon l'invention ;
- les figures 2 et 4 montrent deux exemples de réalisation du motif de marquage utilisé ; et
- la figure 3 donne la forme des signaux de marquage obtenus par projection en X ou en Y pour le marquage de la figure 2.

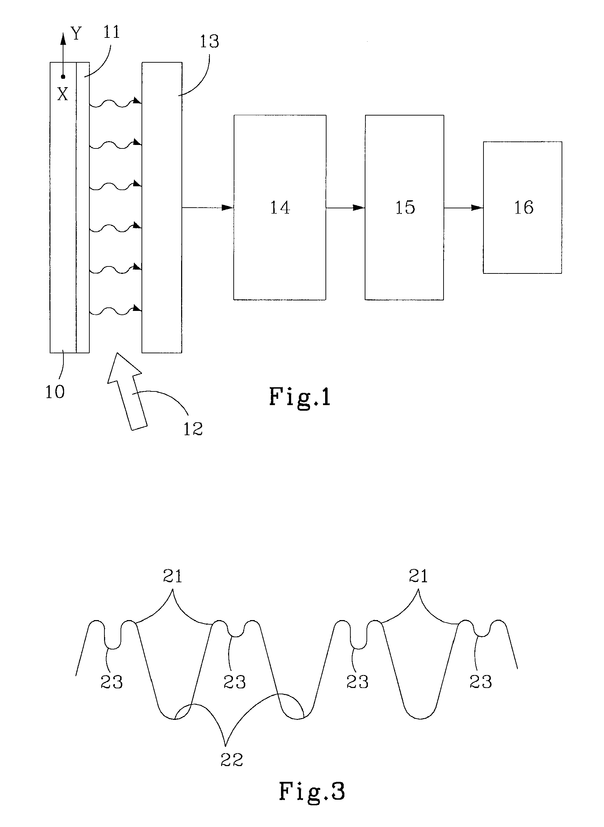

On se référera tout d'abord à la figure 1 qui représente en 10 un objet bidimensionnel susceptible de se déplacer, le déplacement étant repéré selon deux axes orthogonaux X et Y. Le procédé selon l'invention permet de mesurer son déplacement.

A cet effet, l'objet 10 est doté d'un motif de marquage spatialement périodique 11. Des ondes électromagnétiques 12, avantageusement une onde lumineuse, sont projetées sur ce motif de marquage et les ondes qu'il réémet sont captées par un réseau bidimensionnel de détecteurs 13. Dans le cas d'une onde lumineuse, il s'agit d'un réseau de pixels associé à un circuit 14 formant, ensemble, un imageur de type conventionnel ou spécifique suivant l'application. Cet imageur est couplé à un microprocesseur 15, de type DSP, qui analyse les informations reçues et fournit à un système d'affichage 16 une mesure de la position absolue de l'objet 10.

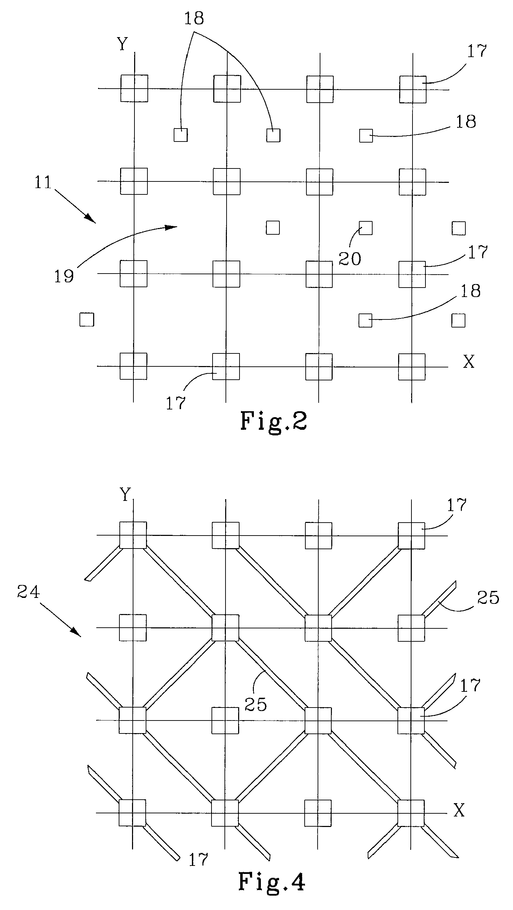

La figure 2 représente le motif de marquage 11 qui est formé d'une grille orthogonale d'axes X et Y constituée d'un premier réseau de carrés identiques 17, ci-après les grands carrés, espacés les uns des autres, par exemple, d'une distance égale à 2 fois leur dimension. Ces carrés constituent le marquage pour la mesure de phase exposée plus loin.

Afin de permettre une mesure de position absolue, le marquage 11 est complété par un deuxième réseau de carrés identiques 18, ci-après les petits carrés, de plus petite dimension que les carrés 17, qui sont disposés au centre d'une case dont les angles sont occupés par quatre grands carrés 17. Typiquement, la dimension des petits carrés 18 est la moitié de celles des grands carrés 17.

Les petits carrés 18 ne sont pas présents dans toutes les cases, car ils servent à fournir un code numérique de position absolue (tel, par exemple une séquence binaire unique issue d'un polynôme) pour chaque ligne et chaque colonne, la présence d'un petit carré, par exemple, représentant le code 1 et son absence le code 0. Comme le montre la figure 2, le code est, d'une ligne à l'autre, décalé d'une période. Dans ce dernier cas le code numérique des colonnes est dépendant de celui des lignes.

Ainsi, la première ligne (supérieure) porte le code 01110, la deuxième le code 00111, la troisième le code 10011, etc.... De ce fait, la première colonne (de gauche) porte le code 001, la deuxième le code 100, la troisième le code 110, etc.

Grâce à ce codage, n'importe quelle case est identifiable. Par exemple, la case repérée sur le dessin par la référence 19 correspond à la rencontre des codes 00111 (ligne) et 100 (colonne). Quant à la case portant la référence 20, elle correspond à la rencontre des codes 00111 (ligne) et 111 (colonne).

A titre indicatif, chaque carré 17 a une surface correspondant à 6 à 12 pixels du capteur 13; les carrés sont espacés les uns des autres d'une distance correspondant à 12 à 24 pixels. L'étendue du marquage représenté comporte une grille de seulement 4 lignes et 4 colonnes de 4 carrés. Dans la réalité, selon la surface du motif, le nombre de lignes et de colonnes incluses dans le champ de vue doit être suffisant pour identifier de manière unique toute la surface de l'objet.

Toutes ces informations sont perçues par le réseau de pixels 13 qui est lu par le circuit 14 pour extraire :
- le déphasage du motif par rapport à une position de référence initiale, à partir de l'image fournie en X et Y par les grands carrés ;
- son déplacement absolu, à partir de l'image fournie en X et Y par les petits carrés.

Chacune des positions en X et en Y est représentée par un nombre qui provient de la somme de deux mesures, à savoir:
1) la position donnée par le code numérique dont l'unité est la période du marquage,
2) la position relative à l'intérieur d'une période donnée par la phase.

Ainsi, si le nombre de périodes du marquage s'étend sur une plage de M bits et la résolution de la mesure de phase est de N bits, on obtient une mesure de la position absolue à (M + N) bits.

Les principales opérations effectuées par le microprocesseur 15 sont exposées ci-après, en référence au marquage de la figure 2. Le champ de vue du capteur 13 dépend du nombre de lignes et de colonnes de pixels de ce dernier.

### Opération 1

Les signaux délivrés par les pixels du capteur 13 sont sommés verticalement selon les colonnes et horizontalement selon les lignes pour obtenir, respectivement, les signaux de marquage périodiques Mx et My, représentatifs des projections, en X et en Y des grands et petits carrés.

Typiquement, ces signaux ont la forme représentée sur la figure 3. Les bosses 21 correspondent aux intervalles entre les grands carrés 17 et les creux 22 à ces derniers. Les bosses 21 présentent, elles-mêmes, de petits creux 23 qui correspondent aux petits carrés 18 et ont donc des profondeurs différentes. Ces creux 23 affectent la mesure de phase et sont donc indésirables.

### Opération 2

Dans un premier temps, les signaux Mx et My sont multipliés scalairement par leurs signaux de référence respectifs afin d'obtenir les deux composantes d'un vecteur dont la phase PHx et PHy est la mesure du déphasage des signaux Mx et My par rapport aux signaux de référence. La méthode utilisée pour cette mesure de phase peut être celle décrite dans le brevet US 6, 528,783 ou dans la demande EP 1 750 099 A1. On pourra donc s'y référer pour une description plus détaillée. A ce stade, les phases mesurées des signaux Mx et My sont affectées par les projections des petits carrés mais leur précision est suffisante pour sélectionner les lignes et les colonnes qui doivent être supprimées pour masquer les petits carrés.

### Opération 3

Les phases PHx et PHy, mesurées lors de l'opération 2, permettent de localiser précisément l'emplacement des petits carrés. L'identification du code numérique représenté par les petits carrés permet alors de déterminer les positions absolues Xp et Yp correspondant à ce code.

### Opération 4

Les phases mesurées lors de l'opération 2 permettent de sélectionner précisément les lignes et les colonnes qui permettent de masquer les petits carrés.

Une nouvelle projection verticale est effectuée en masquant les petits carrés, c'est-à-dire, en désactivant les lignes correspondantes afin d'obtenir un nouveau signal Mx plus précis.

De même, une nouvelle projection horizontale est effectuée en masquant les petits carrés, c'est-à-dire, en désactivant les colonnes correspondantes afin d'obtenir un nouveau signal My plus précis.

Ces nouveaux signaux Mx et My sont traités de la même manière que lors de l'opération 2 et fournissent les phases PHx et PHy qui permettent de calculer les positions relatives à l'intérieur des périodes horizontale et verticale, respectivement

Ainsi, est proposé un procédé permettant de déterminer, de manière bidimensionnelle, la position absolue d'un objet.

Un problème subsiste cependant. Il est lié à ce que l'on désigne le « tilt », c'est-à-dire l'angle que fait le réseau de pixels par rapport à une position idéalement alignée avec le marquage. En production, on peut raisonnablement exiger une précision de 1 à 2 degrés. Idéalement, sans tilt, les projections des carrés du marquage de phase sont des rectangles. Lorsqu'on commence à tilter le capteur, ces rectangles se transforment en trapèze puis, lorsque le tilt correspond juste à un décalage d'une demi période entre le haut et le bas (ou entre la gauche et la droite) du champ de vue les projections deviennent triangulaires. Passé ce stade, l'amplitude du signal diminue de manière excessive, et il n'est pas conseillé d'utiliser le capteur dans ces conditions.

On se référera maintenant à la figure 4 représentant, en 24, une variante de réalisation du marquage 11 de la figure 2 qui présente l'avantage, non seulement, de faire disparaître les petits creux 23 des bosses 21 et donc de supprimer la nécessité du masquage effectué à l'opération 4, mais encore de rendre le système moins sensible au tilt.

Dans ce cas, le marquage 24 comporte toujours les grands carrés 17 de la mesure de phase, mais les petits carrés 18 du marquage 11 sont remplacés par des traits obliques 25 joignant les grands carrés 17 de la ligne adjacente. Ces traits sont orientés dans un sens (par exemple, de gauche à droite) pour coder les 1 et dans l'autre sens (par exemple, de droite à gauche) pour coder les 0. Typiquement, leur épaisseur correspond au quart de la dimension des grands carrés 17.

Ainsi, dans l'exemple de la figure 4, la première ligne porte le code 10011, la deuxième le code 01001, la troisième le code 00100, etc.... De même, la première colonne porte le code 100, la deuxième le code 010, la troisième le code 001, etc ....

De cette manière, les projections sans masquage sont régulières pour X et Y quel que soit le code binaire représenté par les traits obliques 25. La mesure de phase n'est donc plus affectée par leur présence.

Avec un tel marquage :
- le début de l'opération 4, dans laquelle on effectue un masquage, n'est plus nécessaire et les signaux Mx et My calculés lors de l'opération 2 peuvent être utilisés tels quels; et
- l'opération 3 se fait sur les codes définis par les traits 25 par des moyens connus de l'homme de l'art.

La présente invention constitue donc une généralisation à deux dimensions du principe de mesure de phase en quadrature pouvant être facilement implémenté avec un imageur du commerce et un DSP de faible puissance. En effet, l'algorithme n'est à priori pas très gourmand en puissance de calcul. De plus, les marquages proposés sont à la fois simples et robustes. Accessoirement, ces marquages pourraient aussi être utilisés avec avantage pour des systèmes unidimensionnels en lieu et place du double marquage traditionnel comprenant des lignes régulières associées à un code Manchester.

La présente description a été faite en se référant à des marques carrées. Il va de soi, cependant, que le procédé selon l'invention peut utiliser des marques circulaires ou toute autre forme à deux axes de symétrie orthogonaux de mêmes dimensions.

## Revendications

1. Procédé de détermination de la position absolue d'un objet (10) par rapport à une position de référence, **caractérisé en ce qu'**il comporte les principales opérations suivantes :
- association à cet objet d'un motif périodique bidimensionnel (11) formé de marques (17, 18, 25) disposées régulièrement selon une grille bidimensionnelle à X lignes et Y colonnes,
- irradiation dudit motif au moyen d'ondes électromagnétiques,
- captation des ondes réémises par le motif pour obtenir une image de leur répartition spatiale,
- élaboration de deux signaux de marquage périodiques (Mx, My) respectivement représentatifs de cette image selon lesdites lignes et lesdites colonnes, et
- comparaison de ces signaux à des références représentatives de ladite position de référence afin de déterminer le décalage de position de l'objet selon les axes X et Y par rapport à cette position de référence.

2. Procédé selon la revendication 1, **caractérisé en ce que** lesdites marques comportent un premier réseau de carrés identiques (17) et un deuxième réseau de carrés identiques (18) disposés au centre de cases dont les angles sont occupés par les carrés du premier réseau, les carrés de ce deuxième réseau n'étant pas présents dans toutes les cases afin de fournir un code pour chaque ligne et chaque colonne.

3. Procédé selon la revendication 1, **caractérisé en ce que** lesdites marques comportent un premier réseau de carrés identiques (17) et un réseau de traits obliques (25) joignant les carrés du premier réseau de la ligne adjacente, ces traits étant orientés de gauche à droite ou de droite à gauche afin de fournir un code pour chaque ligne et chaque colonne.

4. Procédé selon l'une des revendications 2 et 3, **caractérisé en ce que** ladite opération d'élaboration consiste à effectuer une projection de ladite image selon les axes X et Y.

5. Procédé selon l'une des revendications 2 à 4, **caractérisé en ce que** ladite opération de comparaison consiste à comparer chacun desdits signaux de marquage respectivement à deux signaux de référence sinusoïdaux en quadrature de phase, préalablement déterminés, qui ont la même fréquence que les signaux de marquage.

6. Procédé selon la revendication 5, **caractérisé en ce que** les signaux de marquage Mx et My sont multipliés scalairement par leurs signaux de référence respectifs afin d'obtenir les deux composantes d'un vecteur dont la phase PHx et PHy est la mesure du déphasage des signaux Mx et My par rapport aux signaux de référence.

7. Procédé selon l'une des revendications 5 et 6, **caractérisé en ce que** ladite opération de comparaison consiste, en plus, ayant en mémoire le code initial de chaque ligne et/ou colonne de la grille, à détecter la ligne et/ou colonne présentant le même code, le nombre de lignes et/ou colonnes séparant les deux lignes et/ou colonnes fournit une mesure du déplacement selon X et/ou Y de l'objet.

8. Motif bidimensionnel pour la mise en oeuvre du procédé selon la revendication 1, **caractérisé en ce qu'**il est formé de marques comportant un premier réseau périodique de carrés identiques (17) et un deuxième réseau de carrés identiques (18) disposés au centre de cases dont les angles sont occupés par les carrés du premier réseau, les carrés de ce deuxième réseau n'étant pas présents dans toutes les cases afin de fournir un code pour chaque ligne et chaque colonne de la grille.

9. Motif bidimensionnel pour la mise en oeuvre du procédé selon la revendication 1, **caractérisé en ce qu'**il est formé de marques comportant un premier réseau périodique de carrés identiques (17) et un réseau de traits obliques (25) joignant les carrés du premier réseau de la ligne adjacente, ces traits étant orientés de gauche à droite ou de droite à gauche afin de fournir un code pour chaque ligne et chaque colonne de la grille.
